(19) Europäisches Patentamt
European Patent Office
Office européen des brevets

(11) **EP 2 778 885 B1**

(12) **FASCICULE DE BREVET EUROPEEN**

(45) Date de publication et mention
de la délivrance du brevet:
**26.06.2019 Bulletin 2019/26**

(51) Int Cl.:
***G06F 3/0488*** *(2013.01)*  *G06F 3/0482* *(2013.01)*
*G06F 3/0485* *(2013.01)*

(21) Numéro de dépôt: **14159756.7**

(22) Date de dépôt: **14.03.2014**

(54) **PROCÉDÉ DE TRAITEMENT D'UN GESTE COMPOSÉ, DISPOSITIF ET TERMINAL D'UTILISATEUR ASSOCIÉS**

VERFAHREN ZUR VERARBEITUNG EINER VERBUNDGESTE, ENTSPRECHENDE GERÄT UND BENUTZERENDGERÄT.

A METHOD FOR PROCESSING A COMPOUND GESTURE, CORRESPONDING DEVICE AND USER TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2013 FR 1352310**

(43) Date de publication de la demande:
**17.09.2014 Bulletin 2014/38**

(73) Titulaire: **Orange**
**75015 Paris (FR)**

(72) Inventeurs:
• **Petit, Eric**
**38400 ST MARTIN D'HERES (FR)**
• **Coutant, Stéphane**
**38700 CORENC (FR)**

(74) Mandataire: **Cabinet Plasseraud**
**66, rue de la Chaussée d'Antin**
**75440 Paris Cedex 09 (FR)**

(56) Documents cités:
EP-A1- 2 192 479      US-A1- 2003 122 787
US-A1- 2008 062 141   US-A1- 2009 089 666
US-A1- 2009 271 733   US-A1- 2010 185 989
US-A1- 2011 185 308   US-A1- 2011 225 492

## Description

### 1. Domaine de l'invention

Le domaine de l'invention est celui des interactions, plus précisément des interactions sensibles entre un utilisateur et un terminal.

La présente invention concerne un procédé de traitement d'un geste composé, exécuté par un utilisateur sur une dalle sensible à l'aide d'un outil de pointage.

Elle concerne également un dispositif de traitement apte à mettre en oeuvre un tel procédé. Elle concerne aussi un terminal d'utilisateur comprenant un tel dispositif.

L'invention s'applique de manière particulièrement avantageuse aux interfaces sensibles destinées à des utilisateurs malvoyants ou en situation d'usage de type « eyes-free ».

### 2. Présentation de l'art antérieur

Les interfaces sensibles, par exemples tactiles des terminaux d'aujourd'hui, tablette ou téléphone intelligent (« smartphone », en anglais), s'appuient en grande partie sur des interfaces graphiques classiques (GUI pour « Graphical User Interface », en anglais) dont le modèle d'interaction repose sur le pointage des objets à l'aide d'un outil de pointage, stylet ou doigt. Il est hérité du modèle dit WIMP (pour « *Windows Icones Menus Pointer* », en anglais), selon lequel chaque élément d'interface possède une position spatiale précise dans un repère de l'écran du terminal de l'utilisateur et que l'utilisateur doit connaître afin de pouvoir le manipuler. Ce modèle d'interaction, basé sur le positionnement absolu est utilisé par les personnes voyantes pour interagir avec les applications de leur terminal.

Appliqué à la manipulation tactile de listes défilantes d'éléments graphiques sélectionnables, ce modèle d'interaction, bien que très populaire, possède néanmoins des limites en termes d'usage. Le geste se décompose généralement en deux phases couplées l'une à l'autre : une sélection (« focus », en anglais) au cours de laquelle un élément graphique est mis en exergue de façon temporaire, tant que le doigt reste en contact avec la dalle sensible, et une validation de la sélection, par un lever du doigt ou un appui de type (« tap » ou « touch », en anglais). En particulier, la validation d'un élément graphique sélectionné de la liste exige une précision élevée du geste, sans possibilité simple pour l'utilisateur de corriger son geste en cas d'erreur de pointage. En effet, si l'élément graphique sélectionné n'est pas le bon alors l'utilisateur a seulement la possibilité de faire glisser son doigt sur la surface, ce qui annule la sélection précédente et de recommencer son geste de pointage. Si finalement sa sélection est correcte, l'utilisateur doit, pour la valider, lever son doigt, mais sans le faire glisser, même très légèrement, sans quoi il perd sa sélection et doit aussi recommencer son geste depuis le début.

Ce modèle d'interaction graphique basé sur du positionnement absolu est aussi utilisé par des personnes non voyantes mais dans un mode d'interaction dit « exploratoire », selon lequel l'élément graphique cible est d'abord localisé par tâtonnement à l'aide d'un module de synthèse vocale, puis activé, par exemple au moyen d'un double appui rapide. Ce mode exploratoire permet classiquement, comme par exemple dans le système « *Talkback* » de Google, marque déposée, de déplacer une mise en exergue ou présélection d'un élément graphique de l'interface à l'autre sur la trajectoire du doigt. Il en résulte que seuls les éléments affichés de l'interface sont atteignables, ce qui nécessite d'utiliser un autre mécanisme pour pouvoir déplacer la fenêtre visible. A ce premier inconvénient vient s'ajouter un deuxième lié au fait que la précision du geste est dépendante de la taille et de l'agencement des éléments affichés dans la fenêtre visible.

Pour pallier ces difficultés, certains systèmes comme « *Talkback* » (à partir de la version Android 4.1), proposent, en plus du mode exploratoire, un deuxième mode d'interaction/navigation dit séquentiel ou linéaire, basé sur le déplacement pas à pas d'une présélection. Un geste simple et rapide dans une direction donnée déplace la présélection de l'élément graphique courant à l'élément suivant selon un chemin de navigation défini. On notera que pour l'exécution de ce geste la position de départ du doigt ou de l'outil de pointage importe peu, seules la direction et la vitesse d'exécution étant prises en compte.

Ainsi, contrairement au mode exploratoire lié à du positionnement absolu, ce mode séquentiel est basé sur du positionnement relatif. Toutefois, dans ce dernier système, les deux modes d'interaction, exploratoire, et séquentiel, cohabitent mal entre eux. Le premier problème vient du fait qu'il y a un risque pour l'utilisateur qui démarre sa tâche de sélection avec le mode séquentiel de basculer involontairement dans le mode exploratoire, provoquant alors un changement inopportun du focus, qui saute subitement sur un des éléments de l'interface au lieu de suivre le parcours défini. Cela se produit lorsque le geste n'est pas suffisamment rapide au démarrage. Le deuxième problème vient du fait qu'il n'est pas possible de combiner ces deux modes au sein d'un même geste, en passant d'un mode de positionnement absolu à un mode de positionnement relatif. En effet, si l'utilisateur a d'abord utilisé le pointage absolu pour positionner approximativement le focus, il ne peut pas, sans lever le doigt, basculer dans le mode séquentiel afin d'ajuster sa position. Pour utiliser le mode séquentiel, Il doit nécessairement interrompre son geste, ce qui nuit à la fluidité et à la cohérence de l'interaction.

Enfin, le mode séquentiel étant généralement basé sur un critère de vitesse, un troisième inconvénient vient du fait qu'il ne permet pas non plus de faire défiler plusieurs éléments à la fois. En effet, pour y parvenir, il faudrait alors prendre en compte la distance parcourue par le doigt. Cela supposerait que le geste puisse démarrer lentement afin de pouvoir contrôler le défilement du focus sur les éléments graphiques. Or, si le geste démarre lentement, c'est le mode d'interaction exploratoire qui prime sur le mode séquentiel.

On connaît du document US2009/0271733 un procédé de contrôle d'affichage destiné à être mis en oeuvre dans un terminal d'utilisateur comprenant un écran graphique et une dalle sensible. Il permet d'afficher de façon agrandie un extrait d'un texte affiché à l'écran et lui appliquer des fonctions d'édition. A l'intérieur de la zone d'affichage agrandi, l'utilisateur peut faire défiler le texte en réalisant un geste linéaire en contact avec la dalle sensible.

On connaît aussi du document EP2192479 un procédé de contrôle d'affichage destiné à faciliter la navigation dans une séquence d'éléments graphiques sélectionnables affichés sur l'écran d'un terminal d'utilisateur. Une fois qu'un premier élément a été sélectionné par pointage absolu à proximité de cet élément, l'utilisateur peut continuer son geste dans une direction particulière pour se déplacer dans la séquence vers les éléments affichés. Le déplacement résultant dans la séquence d'éléments est supérieur à la distance réelle parcourue par l'outil de pointage. Au relevé de l'outil de pointage, le procédé prend fin. Si l'utilisateur veut ajuster son déplacement, il doit sélectionner un nouvel élément graphique par pointage absolu.

On connaît aussi du document US2008/0062141 un procédé de contrôle d'affichage destiné à faciliter la navigation dans des images et de sélectionner des images qui sont liées à des éléments multimédias sur un écran tactile.

En conclusion, il existe aujourd'hui d'une part des interfaces dédiées aux personnes voyantes, qui peuvent porter leur attention visuelle à l'interface graphique de leur terminal et disposent d'une bonne habileté gestuelle, d'autre part des interfaces dédiées aux malvoyants, mais qui n'offrent pas un mode d'interaction cohérent, puisqu'elles nécessitent une succession de gestes interprétés selon des modes d'interaction distincts, source d'erreur et de confusion pour l'utilisateur.

## 3. Objectifs de l'invention

Un objectif de l'invention est de fournir une solution d'interaction gestuelle qui facilite la navigation dans une interface utilisateur sensible pour les personnes malvoyantes ou en situation « eyes-free ».

Encore un autre objectif de l'invention est de proposer une solution d'interaction gestuelle qui relâche la contrainte visuo-motrice, inhérente au positionnement absolu tel qu'utilisé classiquement.

Un autre objectif de l'invention est de faciliter la sélection d'un élément graphique cible qui n'est pas directement affiché sur l'écran du terminal de l'utilisateur.

Encore un autre objectif de l'invention est de proposer une interface utilisateur conçue pour tous, n'exigeant ni précision de la manipulation au doigt ni attention visuelle, et basée sur un mode d'interaction cohérent permettant de combiner les deux types de positionnement, absolu et relatif.

## 4. Exposé de l'invention

Ces objectifs, ainsi que d'autres qui apparaîtront par la suite, sont atteints à l'aide d'un procédé de traitement d'un geste selon la revendication 1.

Avec l'invention, le mode d'interaction par défaut est le mode d'interaction séquentielle par positionnement relatif et le mode d'interaction graphique par positionnement absolu n'est activé que par une action spécifique prédéterminée de l'utilisateur.

L'invention repose sur une approche tout à fait nouvelle et inventive du traitement des interactions gestuelles, selon laquelle le mode d'interaction séquentiel par positionnement relatif est toujours accessible même après passage dans le mode de positionnement absolu, ceci au cours d'un même geste continu où le doigt reste en contact avec la dalle tactile. Le basculement dans le mode d'interaction graphique par positionnement absolu est déclenché par un pointage statique (sans nécessité d'un contact physique) prolongé en un point de la dalle sensible. L'utilisateur a donc la possibilité de choisir le moment où il déclenche ce mode d'interaction graphique par positionnement absolu, par exemple en fonction de l'accès visuel à l'écran dont il dispose. Ce mode lui permet en particulier de sélectionner un élément graphique affiché à l'écran, en pointant simplement à proximité d'un élément graphique et sans avoir à relever l'outil de pointage. L'élément graphique sélectionné est mis en exergue, par exemple au moyen d'un cadre ou d'une surbrillance. Une fois cette étape de sélection terminée, le mode d'interaction séquentielle par positionnement relatif est automatiquement réactivé.

Contrairement à l'art antérieur, l'utilisateur n'a plus à relever l'outil de pointage pour signifier qu'il souhaite changer de mode d'interaction. L'utilisateur peut donc passer d'un mode à l'autre sans interrompre son geste et sans contrainte forte sur l'exécution de ce geste. En effet, dans le mode relatif, un tremblement du doigt ou de l'outil de pointage ne fait pas perdre la sélection, car la tolérance vis-à-vis de la précision du geste est réglable indépendamment de l'agencement spatial des éléments. Au contraire, si l'utilisateur relève l'outil de pointage, la sélection est néanmoins conservée. Il peut donc prendre le temps qu'il souhaite pour continuer le geste composé qu'il a initié.

Un cas d'usage particulièrement intéressant de cette invention est celui de la correction d'un premier pointage imprécis. Un utilisateur qui connaît approximativement la localisation spatiale d'un élément graphique d'une séquence sur une interface graphique, pointe son outil de pointage autour de cette localisation, en vue de sélectionner cet élément graphique, puis de l'activer. Selon l'invention, le pointage prolongé qu'il effectue déclenche le basculement dans le mode d'interaction par positionnement absolu et, par exemple, selon la précision du pointage, la sélection d'un élément graphique voisin de celui qu'il visait au départ. Sans qu'il soit nécessaire que l'utilisateur ne relève son outil de pointage, cette sélection déclenche la réactivation automatique du mode séquentiel par positionnement relatif. Le geste initié n'est donc pas considéré comme terminé. Avec l'invention, l'utilisateur a au contraire de l'art antérieur la possibilité de poursuivre son geste dans le mode séquentiel. Pour ajuster sa sélection, il peut alors parcourir séquentiellement la séquence d'éléments jusqu'à ce qu'il atteigne l'élément d'intérêt. Il n'a donc pas besoin d'être précis dans son pointage initial, ni de porter une attention visuelle forte à la disposition spatiale des éléments graphiques affichés à l'écran. Avec l'invention, la correction d'un geste imprécis est rendue plus aisée, par la combinaison des deux modes d'interaction.

L'invention permet ainsi de résoudre le problème de l'incohérence des modes d'interaction avec une dalle sensible de l'art antérieur, en proposant une solution qui les combine de façon simple et intuitive pour l'utilisateur.

Selon un aspect de l'invention, le procédé de traitement d'un geste composé comprend en outre l'étape suivante :

> sur détection d'un déplacement de l'outil de pointage selon une première orientation prédéterminée, ajustement de la sélection sur un élément graphique suivant ou précédent, selon une première direction, de ladite séquence ordonnée, le nombre d'éléments graphiques parcouru dans la séquence étant proportionnel au déplacement de l'outil de pointage sur la dalle sensible et indépendant de la disposition spatiale des éléments graphiques.

Dans le mode d'interaction séquentielle par positionnement relatif qui constitue ici le mode par défaut, la seule contrainte que l'utilisateur doit ensuite satisfaire pour ajuster sa sélection, est de donner à son geste une trajectoire selon une orientation prédéterminé, par exemple vertical, une direction prédéterminée, par exemple vers le bas, et une amplitude fonction de l'avancée qu'il souhaite dans la séquence ordonnée d'éléments graphiques sélectionnables. Aucune contrainte de vitesse n'est associée à ce geste linéaire.

On notera que la direction inverse permet à l'utilisateur de reculer ou revenir en arrière dans la séquence ordonnée.

Ainsi, contrairement aux solutions de l'art antérieur mettant en oeuvre le mode séquentiel, quand l'utilisateur effectue un geste linéaire, il est libre de l'exécuter à la vitesse qu'il souhaite. L'invention est donc bien adaptée aux utilisateurs porteurs de handicaps.

Cela signifie que l'utilisateur peut, pour donner plus d'amplitude à son geste et parcourir un plus grand nombre d'éléments graphiques (que ceux affichés à l'écran), répéter plusieurs fois la même portion de geste dans la direction prédéterminée, à la vitesse qu'il souhaite, en démarrant son geste de là où il souhaite, en levant le doigt de la dalle sensible entre deux portions, sans déclencher pour autant le passage à l'étape de validation ni la fin du traitement.

Selon un autre aspect de l'invention, le procédé comprend en outre l'étape suivante :

- sur détection d'un déplacement de l'outil de pointage selon un deuxième axe et une deuxième direction prédéterminés, validation de la sélection, comprenant le déclenchement d'une commande de validation associée au dernier élément graphique sélectionné.

Pour valider sa sélection, l'utilisateur n'a plus besoin d'interrompre son geste, par exemple en relevant le doigt. Il a simplement à effectuer un geste linéaire selon une deuxième orientation et une deuxième direction prédéterminées, par exemple à l'horizontal et vers la droite. Avantageusement, une sensibilité du déclenchement de la validation peut être réglée en fonction d'un seuil minimal de distance parcourue par l'outil de pointage, afin de s'adapter à la précision de l'utilisateur et d'éviter les fausses validations.

Selon cet aspect de l'invention l'utilisateur peut donc réaliser un geste composé qui est analysé phase par phase en détectant au moins trois phases distinctes de geste: une phase de sélection, au cours de laquelle l'utilisateur sélectionne un élément graphique sélectionnable affiché à l'écran par un ou pointage statique de durée suffisante sur la dalle sensible, une phase d'ajustement au cours de laquelle la sélection est déplacée en fonction du déplacement linéaire de l'outil de pointage selon un axe et une direction prédéterminés et une phase de validation, au cours de laquelle la sélection éventuellement ajustée est validée par un geste linéaire selon un deuxième axe et une deuxième direction prédéterminés.

Le positionnement absolu de l'outil de pointage sur un élément affiché à l'écran du terminal n'étant mis en oeuvre qu'à l'initialisation du geste, avec un ajustement à suivre, par simple glissement de l'outil de pointage selon un axe et une direction donnés, l'utilisateur n'a, pendant l'exécution d'un geste composé, que très peu besoin de précision ni dans sa manipulation ni dans la surveillance visuelle qu'il exerce sur l'écran.

Avec l'invention, la tolérance au glissement involontaire de l'outil de pointage est plus grande, du fait du basculement automatique en mode séquentiel par positionnement relatif une fois la sélection réalisée.

De plus, lors de l'étape d'ajustement qui fait suite à la sélection, l'utilisateur garde le contrôle sur la sélection, avec une sensibilité sur la distance parcourue réglable indépendamment de la disposition spatiale des éléments.

L'invention permet donc de relâcher la contrainte visuo-motrice qui pèse habituellement sur l'utilisateur. Elle est donc adaptée aussi bien aux utilisateurs voyants qu'aux utilisateurs malvoyants ou en situation « eyes-free ».

Ce relâchement de la contrainte de coordination visuo-motrice présente un grand intérêt, en termes de conception et d'usage «pour tous ». En effet, il permet notamment d'entrevoir la conception d'un système de menus principal pour terminaux, applicable à tout type d'interface (mobile, web, multimédia) et à tout type d'utilisateur (expert, débutant, malvoyant, etc).

L'invention propose ainsi une solution générique d'interprétation d'un geste, basée sur un mode d'interaction par positionnement relatif et permettant un basculement facile vers le mode d'interaction par positionnement absolu, et vice versa.

Cette technique d'interaction générique peut être intégrée dans un composant d'interface tactile de type menu hiérarchique permettant d'organiser, de présenter et de sélectionner/activer les fonctions/données d'une application quelconque.

Selon un aspect de l'invention, préalablement à l'étape de sélection, un élément graphique sélectionnable et affiché sur l'écran, est présélectionné.

Avant la mise en oeuvre de l'étape de sélection, une présélection est placée sur un élément graphique sélectionnable par défaut. Cette présélection est par exemple mise en évidence par un indicateur visuel placé sur l'élément graphique présélectionné. Un avantage de cette solution est qu'elle est simple et qu'elle permet à l'utilisateur de repérer très rapidement où se trouve le curseur avant de commencer son geste.

Selon un autre aspect de l'invention, le procédé de traitement d'un geste composé comprend en outre une étape de modification de la représentation graphique restituée à l'écran au moins en fonction de l'ajustement de la sélection.

La représentation graphique restituée à l'écran s'adapte automatiquement au déplacement induit par le geste de l'utilisateur dans la séquence ordonnée d'éléments graphiques sélectionnables, de telle sorte que l'élément graphique sélectionné soit toujours visible et que l'utilisateur puisse atteindre tous les éléments sélectionnables de l'interface. Ainsi, ce qui est affiché à l'écran reste cohérent avec l'ajustement de la présélection.

Selon un autre aspect de l'invention, la commande de validation appartient à un groupe comprenant au moins :

- l'accession à un niveau inférieur d'un menu hiérarchique d'éléments graphiques sélectionnables ;
- le lancement d'un programme applicatif déterminé ;
- la validation d'une option ;
- le retour au niveau supérieur d'un menu hiérarchique d'éléments graphiques sélectionnables.

Les éléments graphiques sélectionnables de la séquence ordonnée peuvent être de différents types : soit ils sont directement associés à une action prédéterminée, comme par exemple le fait de lancer une application ou de cocher une case, soit ils permettent d'accéder à une sous-séquence ordonnée d'éléments graphiques sélectionnables, lorsque la séquence est organisée de façon hiérarchique. Un avantage du procédé selon l'invention est qu'il permet de traiter un geste composé.

Selon encore un autre aspect de l'invention, suite à la validation de la sélection, ladite validation comprenant le déclenchement d'une commande d'accession à un sous-menu hiérarchique d'éléments graphiques, ledit procédé est apte à répéter au moins une des étapes de sélection, d'ajustement et de validation, en fonction de l'interaction détectée.

Un avantage de l'invention est qu'elle permet de traiter les gestes composés enchaînant une succession de gestes simples, de pointage statique prolongé pour la sélection d'un élément, linéaires selon une première orientation et une première direction pour l'ajustement d'un élément sélectionné et/ou linéaires selon un deuxième orientation et une deuxième direction pour la validation de la sélection. Les étapes de sélection, ajustement et validation se succèdent en conséquence, en fonction de l'interaction détectée par le terminal. Un relevé de doigt entre chaque geste n'étant pas imposé par l'invention, on peut aussi envisager de naviguer dans un menu hiérarchique à l'aide d'un seul et même geste composé.

Avec l'invention, ce geste n'est donc pas interprété comme terminé à l'issue de l'étape de validation. Cela signifie que les trois phases peuvent s'enchaîner dans un même geste composé de façon continue, fluide et peu contraignante. En effet, l'utilisateur a la possibilité de réaliser cet enchainement à l'aide de plusieurs gestes simples successifs, avec ou sans relevé de son outil de pointage.

Selon encore un autre aspect, le procédé de traitement d'un geste composé comprend en outre une étape d'émission d'un signal de notification visuelle, vibratoire ou sonore, lorsque lorsqu'une sélection, un ajustement ou une validation a été effectuée.

Les différentes étapes de traitement du geste composé sont notifiées de façon distincte, à l'aide d'un signal visuel, sonore ou vibratoire, clairement reconnaissable. Un avantage d'une telle notification est qu'elle assiste l'utilisateur dans l'exécution de son geste.

Pour un utilisateur malvoyant ou bien en situation « eyes-free », une notification sonore, audio ou vibratoire sera plus adaptée qu'une notification visuelle.

Pour un utilisateur voyant, une notification visuelle, éventuellement accompagnée d'une notification sonore ou vibratoire, jalonne sa navigation et lui permet de n'accorder qu'une faible attention visuelle à la représentation graphique restituée à l'écran.

Le type de notification peut être en outre adapté au cas d'usage et au type d'utilisateur, pour que même si ce dernier n'a pas d'accès visuel à l'écran, il puisse suivre les étapes du traitement de son geste et le faire évoluer en conséquence.

Le procédé de traitement qui vient d'être présenté dans ses différents modes de réalisations, peut être mis en oeuvre par un dispositif de traitement selon la revendication 9.

Avantageusement, il comprend aussi une unité d'ajustement de la sélection, un module de validation de la sélection, une unité de modification de la représentation graphique en fonction de l'ajustement de la sélection, une unité d'émission d'un signal de notification visuelle, vibratoire ou sonore, lorsqu'une sélection, un ajustement ou une validation a été effectué.

L'invention concerne aussi un équipement terminal, selon la revendication 10.

L'invention concerne encore un programme d'ordinateur selon la revendication 11. Un tel programme peut utiliser n'importe quel langage de programmation. Il peut être téléchargé depuis un réseau de communication et/ou enregistré sur un support lisible par ordinateur.

L'invention se rapporte enfin à un support d'enregistrement selon la revendication 12.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

## 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente de façon schématique un exemple de représentation graphique d'un ensemble d'éléments graphiques sélectionnables sur un écran d'un terminal d'utilisateur, selon un mode de réalisation de l'invention
- la figure **2** présente de façon schématique les étapes du procédé de traitement d'un geste composé selon un premier mode de réalisation de l'invention ;
- les figures **3A** à **3F** présentent de façon schématique un premier exemple de geste composé traité par le procédé de traitement selon l'invention, appliqué à un premier type d'interface graphique ;
- les figures **4A** à **4G** illustrent de façon schématique un deuxième exemple de geste composé traité par le procédé de traitement selon l'invention, appliqué à un deuxième type d'interface graphique ;
- les figures **5A** à **5G** illustrent de façon schématique un troisième exemple de geste composé traité par le procédé de traitement selon l'invention appliqué au deuxième type d'interface graphique ; et
- la figure **6** présente un exemple de structure d'un dispositif de traitement d'un geste tactile selon un mode de réalisation de l'invention.

## 6. Description d'un mode de réalisation particulier de l'invention

Dans la suite, on désigne par geste simple un geste continu effectué d'une seule traite sans relevé de l'outil de pointage (« stroke » en anglais). On entend par geste composé, un geste comprenant plusieurs phases distinctes, une phase étant formée d'un ou plusieurs gestes simples.

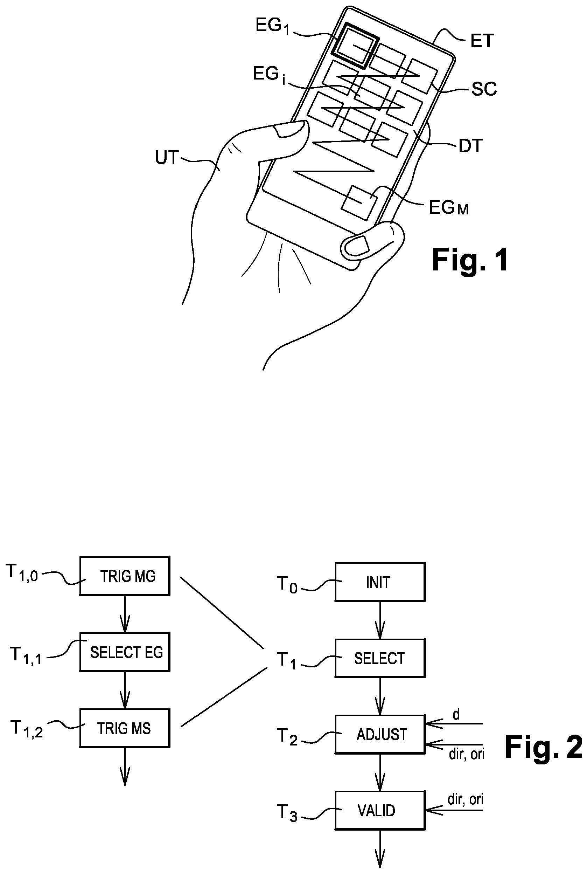

En relation avec la Figure **1,** on présente un équipement terminal d'utilisateur ET, de type « smartphone » ou tablette par exemple, comprenant une dalle sensible, par exemple tactile DT superposée à un écran SC.

On notera que l'invention ne se limite pas à cet exemple illustratif et s'applique même si l'écran graphique est éteint ou absent, en particulier s'il est déporté comme dans le cas d'une télécommande tactile agissant à distance sur un écran. Une représentation graphique RG comprenant un ensemble d'éléments graphiques sélectionnables $EG_1$ à $EG_N$ (« items », en anglais) est affichée, au moins en partie sur l'écran SC. Il faut comprendre que certains éléments $EG_{M+1}$ à $EG_N$ peuvent ne pas être affichés si la taille de l'écran n'est pas suffisante par rapport à celle de la représentation graphique considérée. Ces éléments font toutefois partie de l'interface graphique et peuvent être sélectionnés.

Parmi les éléments affichés, un des éléments $EG_i$ est présélectionné. Pour le mettre en évidence, son apparence est modifiée. A titre d'exemple, sur la figure, il est encadré à l'aide d'un épais cadre de couleur. En variante, il pourrait être mis en surbrillance.

Dans cet exemple, les éléments graphiques sélectionnables sont des icônes disposés en grille. Toutefois, l'invention ne se limite pas à ce cas particulier d'agencement spatial ou d'éléments graphiques, tout autre type de représentation graphique pouvant être envisagé, en particulier, une représentation sous la forme d'une liste linéaire verticale d'éléments textuels est une alternative possible.

L'utilisateur dispose d'un outil de pointage ou bien utilise son doigt pour interagir avec la dalle tactile et sélectionner un élément graphique sélectionnable de la représentation RG. Dans la suite, on parlera d'outil de pointage pour désigner indifféremment l'un ou l'autre.

Le terminal ET comprend un module de traitement des interactions tactiles , apte à fonctionner selon au moins deux modes d'interaction :

- Un premier mode, dit d'interaction graphique par positionnement absolu, déclenché par un appui statique prolongé en une position spatiale de la dalle DT, permettant à l'utilisateur de sélectionner un élément graphique lorsque la position appuyée se trouve à proximité de l'emplacement d'un élément graphique sélectionnable EGi représenté sur l'écran. Selon ce mode, la sélection est placée sur l'élément graphique sélectionnable EGj le plus proche de la position indiquée par l'outil de pointage, suite à l'appui statique prolongé de l'utilisateur sur la dalle tactile ;
- Un deuxième mode, dit d'interaction séquentielle par positionnement relatif, mis en oeuvre par défaut, permettant non seulement à l'utilisateur, de déplacer la sélection d'un élément graphique sélectionnable à un autre selon un ordre de parcours prédéterminé, à l'aide d'un geste linéaire effectué selon une première orientation et une première direction prédéterminés, plusieurs déplacements successifs étant possibles au cours du même geste. Ce mode permet aussi à l'utilisateur de valider une présélection à l'aide d'un geste linéaire effectué selon un deuxième orientation et une deuxième direction prédéterminés. Ce mode n'exige pas de l'utilisateur un contrôle visuo-moteur important.

On notera que l'invention qui va être décrite ci-dessous de façon plus détaillée, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

En relation avec la Figure **2,** on présente maintenant les étapes du procédé de traitement d'un geste composé selon un premier mode de réalisation de l'invention.

L'utilisateur de l'équipement terminal ET souhaite sélectionner l'élément graphique sélectionnable EGi de la représentation graphique RG. Le procédé de traitement d'un geste composé selon l'invention est mis en oeuvre sur détection d'une mise en contact de l'outil de pointage de l'utilisateur avec la dalle tactile du terminal ET.

On notera que la détection d'une interaction prend fin normalement dès détection d'une perte de contact de l'outil de pointage avec la dalle tactile DT. Néanmoins, un mécanisme d'inertie peut être activé, basé sur un modèle physique impliquant une masse virtuelle et des forces de frottement, de sorte que le traitement peut se poursuivre sur une certaine distance virtuelle dans le prolongement du geste après la perte de contact.

Au cours d'une première étape T0, l'élément graphique sélectionnable $EG_1$ est sélectionné. Il s'agit d'une sélection initiale qui sert de point de départ à la mise en oeuvre du procédé de traitement d'un geste composé selon un aspect de l'invention.

Selon un premier aspect, la sélection initiale correspond à une présélection existante issue d'une précédente manipulation de l'interface, ou encore à un élément sélectionnable défini par défaut. Cet élément présélectionné par défaut ou non peut être quelconque, par exemple le premier élément affiché en haut et à gauche de l'écran.

Selon un deuxième aspect de l'invention, le geste de l'utilisateur commence par un pointage statique, avec ou sans pression, d'une courte durée, par exemple 500ms, à proximité d'un élément graphique sélectionnable affiché sur l'écran. Sur détection de ce pointage statique, le procédé de traitement selon l'invention déclenche en $T_{1,0}$ le basculement du mode d'interaction séquentielle MS par positionnement relatif vers le mode d'interaction graphique MG par positionnement absolu, puis la sélection en $T_{1,1}$ de l'élément graphique le plus proche. Cet élément sélectionné au début du geste, EGi, est celui dont les coordonnées spatiales dans un référentiel de l'écran sont les plus proches de celles de la position initiale du geste de l'utilisateur. On comprend que c'est ce pointage statique de courte durée qui permet de déclencher l'interprétation de cette phase de geste selon un mode d'interaction par positionnement absolu. Une fois la sélection initialisée, le basculement $T_{1,2}$ dans le mode MS d'interaction séquentielle par positionnement relatif se fait automatiquement.

Au cours d'une étape T2, un déplacement linéaire de l'outil de pointage entre le point de départ et un point d'arrivée, suivant une première orientation et une première direction, est mesuré. Par exemple, ce geste est effectué selon une orientation verticale et une direction vers le bas.

Il est donc interprété selon un mode d'interaction par positionnement relatif, c'est-à-dire uniquement en se basant sur des déplacements relatifs en X et en Y d'un référentiel spatial de la dalle tactile et indépendamment de l'agencement spatial des éléments affichés à l'écran. Au fur et à mesure qu'un déplacement relatif suffisant, c'est-à-dire supérieur à un certain seuil SD, est mesuré selon l'orientation ori prédéterminée, la sélection est déplacée sur l'élément suivant dans la séquence ordonnée. A chaque nouveau déplacement dans la direction dir fixée supérieur au seuil SD, un nouvel élément est sélectionné. A la fin de cette étape, la sélection a donc été ajustée de l'élément graphique initialement sélectionné EGi à un autre élément graphique sélectionnable de la séquence.

On peut prédire le nombre total k d'éléments survolés en fonction de la distance d parcourue, qui correspond à la somme des déplacements relatifs cumulés selon l'axe et la direction prédéterminés, au moyen de la loi suivante :

$$k = \alpha . d \qquad (1)$$

Avec $\alpha = \frac{1}{SD}$ paramètre de sensibilité. Plus sa valeur est grande et plus le nombre d'éléments graphiques sélectionnables survolés est important, à distance parcourue constante.

Ainsi, si la valeur du seuil SD est fixée à une valeur faible, la sensibilité $\alpha$ sera élevée de même que le nombre d'éléments k parcourus au cours du ou des gestes successifs de la phase d'ajustement.

La sensibilité de la navigation gestuelle peut être adaptée en fonction des préférences de l'utilisateur, ce qui constitue un avantage supplémentaire du mode d'interaction par positionnement relatif.

Selon une variante, la sensibilité du défilement peut être modulée en fonction de la dynamique du geste. De ce fait, la loi s'écrit de la façon suivante :

$k = \alpha(t).d(t),$ avec t variable temporelle

Ainsi, lorsqu'en début de geste, la variation de vitesse du point de contact de l'outil de pointage augmente, alors la sensibilité est artificiellement augmentée, ceci afin d'améliorer l'efficacité ou l'efficience de la manipulation de la séquence d'éléments graphiques. Inversement, lorsque la vitesse décroit, en particulier en fin de geste au moment de la sélection finale, alors la sensibilité est artificiellement diminuée, de manière à augmenter la précision du geste durant la phase d'ajustement. Ceci est d'autant plus intéressant dans le cas d'un geste composé menant à une validation du dernier élément graphique sélectionné.

Au cours d'une étape T3, un geste linéaire selon une deuxième orientation et une deuxième direction est détecté de façon robuste selon une technique similaire à celle qui vient d'être présentée. Il est interprété comme une validation de la sélection précédente.

Avantageusement, une sensibilité peut être associée à l'interprétation de ce geste, de façon similaire à celle utilisée dans l'étape T2, avec une valeur différente. Un intérêt est d'éviter les fausses validations et de s'adapter à la précision de l'utilisateur considérée, celle-ci pouvant varier.

Il résulte de cette étape le déclenchement d'au moins une commande de validation associée au dernier élément graphique sélectionné ou associé au niveau hiérarchique de l'élément en question par exemple dans le cas d'une commande de « retour au menu précédent ».

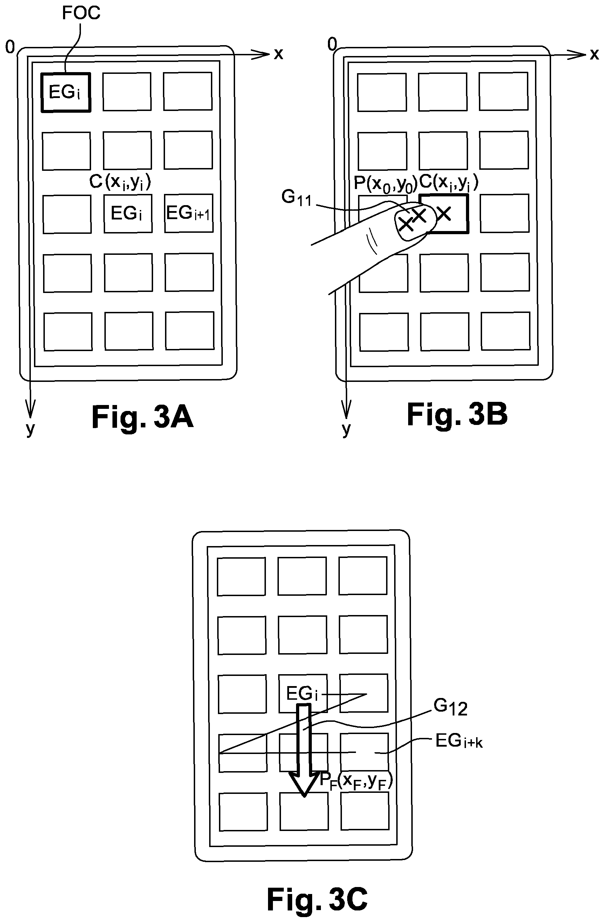

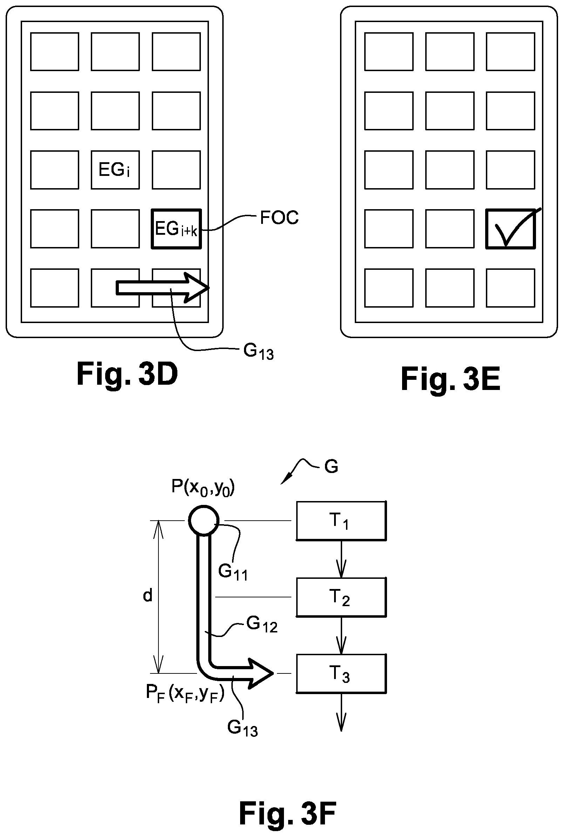

Un premier exemple de geste composé G1 traité par le procédé selon ce mode de réalisation de l'invention va maintenant être présenté en relation avec les Figures **3A à 3F.** Le geste composé entier est illustré par la Figure **3F.**

Dans cet exemple, on suppose que les éléments graphiques sélectionnables $EG_1$ à $EG_N$ de l'ensemble considéré sont représentés en grille et qu'ils sont organisés de façon séquentielle, selon un ordre de parcours prédéterminé, par exemple en Z comme indiqué sur les figures **1 et 3C.** En relation avec la Figure **3A,** le premier élément graphique affiché EG1 est présélectionné. Dans cet exemple, il est visuellement mis en exergue à l'aide d'un cadre épais FOC. Le geste qui va maintenant être décrit se décompose ici en trois phases ou gestes simples, qui sont traitées respectivement au cours des trois étapes du procédé selon l'invention:

- Une phase initiale $G_{11}$, illustrée par la Figure **3B,** constituée d'un pointage statique d'une courte durée de l'outil de pointage à proximité d'un élément graphique sélectionnable EGi centré sur le point de coordonnées C(xi, yi). Plus précisément, on considère que le point de contact initial a les coordonnées P(x0, y0). A l'issue de cette phase initiale, le procédé de traitement selon l'invention sélectionne l'élément graphique EGi. Ceci se traduit d'un point de vue graphique par une mise en exergue de l'élément graphique sélectionné. Par exemple, cette sélection est rendue visible par la superposition d'un cadre de couleur à cet élément sur la représentation graphique. Selon une variante, la représentation de l'élément EGi est grossie ;

- Une phase d'ajustement $G_{12}$, illustrée par la Figure **3C,** au cours de laquelle le geste se poursuit selon une trajectoire rectiligne selon l'axe vertical et dans la direction haut vers bas. Avantageusement, cet axe correspond à la longueur de l'écran, ce qui permet l'accomplissement d'un geste plus ample. Cette phase du geste peut aussi bien être lente que rapide, la vitesse d'exécution n'étant pas prise en compte dans l'analyse du geste par le procédé selon l'invention. Le procédé de traitement selon l'invention consiste alors à mesurer la distance parcourue par l'outil de pointage en cours de geste et jusqu'à un point final PF(xF, yF), à traduire cette distance parcourue en un nombre k d'éléments graphiques sélectionnables EGS parcourus selon l'ordre de parcours prédéterminé de la séquence et à déplacer la sélection du nombre k d'éléments obtenu. Le nouvel élément mis en exergue est l'élément EGi +k ;

- Une phase finale $G_{13}$, illustrée par la Figure **3D,** au cours de laquelle, après avoir marqué une courbe au niveau du point final PF, le geste repart dans une autre direction, distincte de la précédente, par exemple à droite, en parcourant à nouveau une certaine distance. Le procédé de traitement selon l'invention mesure l'orientation ori et la direction dir du geste selon une approche géométrique et différentielle, par exemple en mesurant une différence d'accroissement relatif en X et en Y cumulée sur un certain nombre de points de la trajectoire du geste - chaque accroissement correspondant à la projection du vecteur déplacement relatif instantané sur un des deux axes - et, lorsque l'orientation et la direction mesurées coïncident avec le deuxième axe et la deuxième direction prédéterminés, par exemple à l'horizontal et vers la droite, l'interprète comme une commande de validation liée au dernier élément graphique sélectionné.

En relation avec la Figure 3E, la commande de validation associée à l'élément graphique $EG_{i+k}$ comprend le fait de cocher une case.

En relation avec la Figure 3F, les phases G11, G12 et G13 du geste composé G1 sont mises en correspondance avec les étapes T1, T2 et T3 du procédé de traitement selon l'invention.

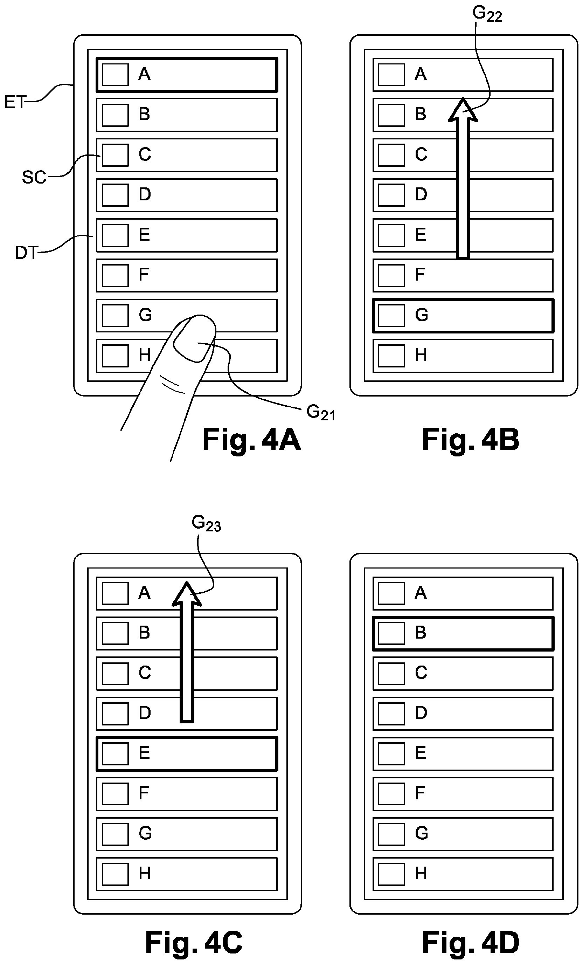

En relation avec les Figures **4A à 4G,** on présente maintenant un exemple d'application du procédé de traitement d'un geste composé $G_2$ selon l'invention à la navigation dans un système de menus imbriqués, au sein d'une première interface graphique, de type terminal mobile.

Selon une telle représentation graphique, un menu comprend une séquence d'éléments graphiques sélectionnables, par exemple disposés verticalement selon une colonne. Dans cet exemple, le menu principal représenté en relation avec les Figures **4A, 4B** et **4C** est composé des éléments graphiques A à H. On considère que le premier élément A est présélectionné par défaut, ce qui correspond à l'étape T0 du procédé selon l'invention. Il est donc encadré sur la figure **4A.** Certains éléments graphiques de la colonne contiennent un sous-menu, comme par exemple l'élément B c'est-à-dire que quand on les sélectionne, on accède à une sous-séquence ordonnée d'éléments graphiques sélectionnables, par exemple disposés en colonne. En particulier, l'élément B contient un sous menu comprenant des éléments $B_1$ à $B_5$. D'autres éléments du menu principal sont des éléments graphiques terminaux, c'est-à-dire qu'ils sont associés à des commandes de validation directe, telles qu'une case à cocher ou une application à lancer.

En relation avec la Figure 4A, l'utilisateur commence sa composition de gestes $G_2$ par un pointage $G_{21}$ approximatif de l'élément G. Dans cet exemple, l'utilisateur marque son pointage par un appui court, d'environ 500 ms, à proximité de l'élément G, qui est interprété en T1 par le procédé de traitement selon l'invention, selon le mode d'interaction graphique par positionnement absolu dans le système de coordonnées de l'écran, comme une sélection initiale de l'élément G. En relation avec la Figure **4B,** le cadre de sélection est donc déplacé de l'élément A (présélectionné par défaut), sur l'élément G.

Suite à cette sélection initiale, le mode d'interaction considéré pour la suite du geste composé est le mode d'interaction par positionnement relatif selon un axe et associé à la logique séquentielle.

En relation avec la Figure 4B, l'utilisateur exécute un deuxième geste $G_{22}$ correspondant à une trajectoire linéaire verticale de bas en haut, donc en direction de l'élément A. On notera que dans cet exemple, le geste ne débute pas au niveau de l'élément G. On rappelle que l'utilisateur a levé son outil de pointage entre le premier geste et le deuxième. Ceci n'a toutefois aucune importance, car en mode d'interaction séquentielle, le positionnement absolu de l'outil de pointage sur la dalle tactile n'est pas pris en considération.

Bien sûr, avec l'invention, l'utilisateur aurait tout aussi bien pu continuer le geste qu'il avait initié pour sélectionner l'élément G, sans lever son outil de pointage.

Ce que le procédé selon l'invention détecte, en T2, c'est la direction de la trajectoire de cette deuxième portion de geste et la distance d parcourue sur la dalle tactile. A la volée, le nombre k d'éléments graphiques sélectionnables survolés est déterminé selon l'équation (1) précédente.

Au cours de l'exécution de ce deuxième geste $G_{22}$, la sélection initiale, représentée sous forme d'un cadre est donc ajustée de l'élément G à l'élément E, comme illustré par la Figure **4C.**

Au cours de l'exécution d'une troisième phase de geste $G_{23}$, le geste se poursuit par une deuxième trajectoire linéaire, dans la même direction et le même sens que la précédente, qui a pour effet d'ajuster la sélection de l'élément E à l'élément B, en relation avec la Figure **4D.**

Dans cet exemple, l'utilisateur stoppe son geste linéaire lorsque la sélection se place sur l'élément B.

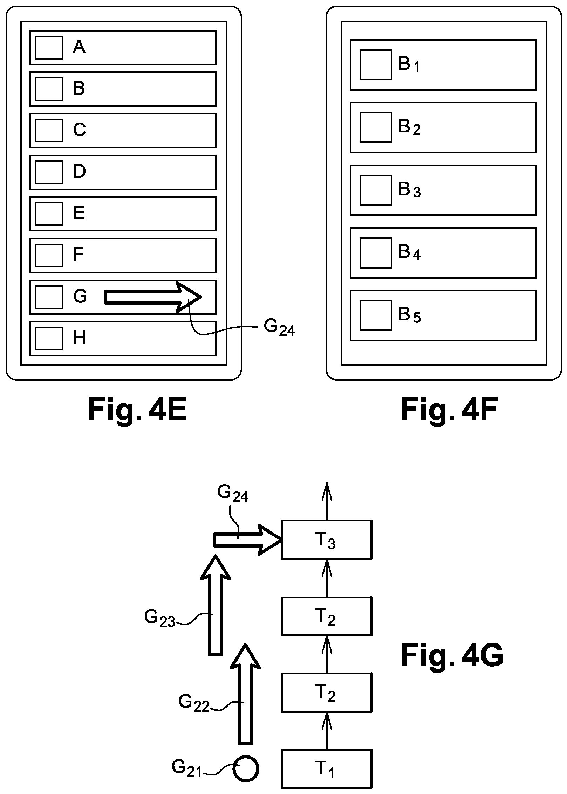

L'utilisateur entame alors la troisième phase de sa composition, qui consiste en un déplacement linéaire horizontal vers la droite, comme illustré par la figure **4E.** On notera ici encore que dans cet exemple, ce quatrième geste $G_{24}$ est détaché du troisième, puisqu'il se trouve à hauteur de l'élément G, alors que la troisième phase de geste $G_{23}$ se terminait à hauteur de l'élément B. L'utilisateur a dû lever son outil de pointage entre les deux phases de gestes successives. Encore une fois, ceci n'a aucune importance avec le mode d'interaction séquentiel.

Bien sûr, avec l'invention, l'utilisateur aurait tout aussi bien pu continuer son geste au niveau de l'élément B, sans lever son outil de pointage, réalisant un unique geste composé.

Sur détection d'un changement de direction, le procédé de traitement selon l'invention, décide en T3 que le dernier élément graphique sélectionné, à savoir l'élément B, est validé et il déclenché une commande de validation associée. Comme l'élément B contient un sous-menu, la commande de validation est une commande d'affichage du sous-menu en question. Ce sous-menu est illustré par la Figure **4F.** Il comprend 5 éléments graphiques $B_1$ à $B_5$. L'élément $B_1$ est présélectionné par défaut, donc encadré. La composition gestuelle $G_2$ effectuée par l'utilisateur a donc permis l'ouverture du sous-menu B.

En relation avec la Figure **4G,** les phases successives (ou gestes) de la composition $G_2$ sont mises en correspondance avec les étapes T1 à T3 du procédé de traitement selon l'invention. Dans cet exemple, les étapes du procédé de traitement sont mises en oeuvre selon la séquence suivante : T1 pour le geste $G_{21}$, T2 pour le geste $G_{22}$, T2 encore pour le geste $G_{23}$ et T3 pour le geste $G_{24}$.

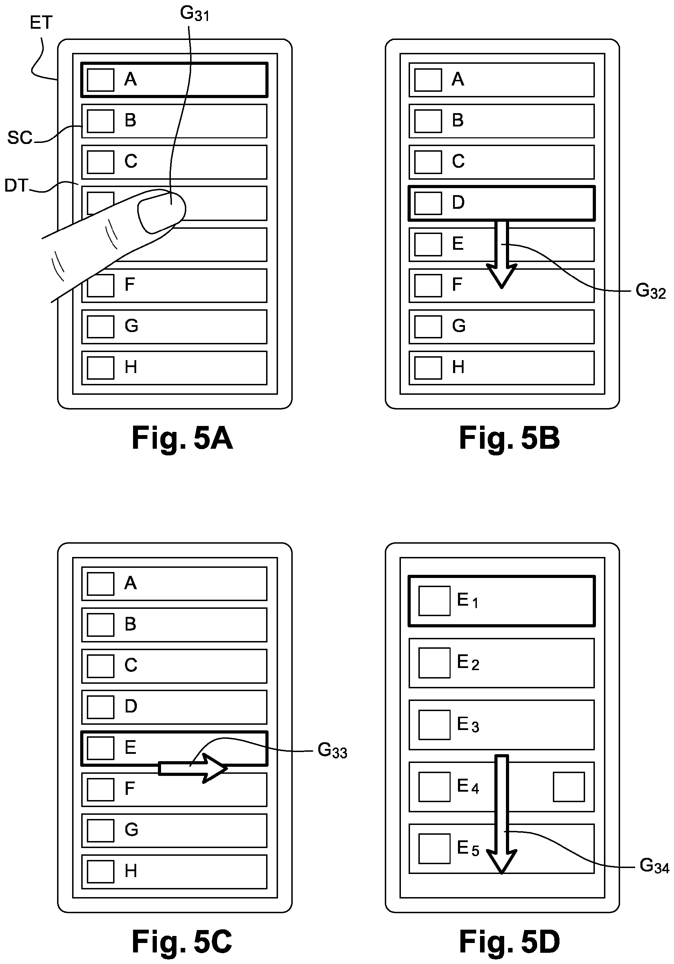

En relation avec les figures **5A à 5G,** on présente maintenant un deuxième exemple d'application du procédé de traitement d'un geste tactile composé $G_3$ se-

lon l'invention à la navigation dans un système de menus imbriqués. La différence porte ici sur la réalisation du geste G3 effectué de façon continue en un seul trait multidirectionnel.

On considère la même représentation graphique que dans l'exemple précédent.

En relation avec la Figure **5A,** l'élément A constitue la présélection par défaut.

Dans cet exemple, l'utilisateur commence son geste par un pointage approximatif $G^{31}$ à proximité de l'élément D, qui se trouve sélectionné par le procédé selon l'invention au cours d'une étape T1, comme illustré par la figure **5B.** Sans lever de l'outil de pointage, l'utilisateur poursuit son geste par une deuxième portion de geste $G_{32}$ linéaire verticale de haut en bas. La distance parcourue entraîne, en T2, l'ajustement de la sélection sur l'élément graphique E, comme le montre la Figure **5C.**

Une fois la sélection ajustée sur l'élément E, l'utilisateur continue son geste par une troisième portion $G_{33}$ qui bifurque de 90 degrés vers la droite. Cette portion linéaire est détectée et interprétée en T3 comme coïncidant avec la deuxième orientation la deuxième direction prédéterminés, ce qui a pour effet de déclencher une validation de la sélection de l'élément E, et donc l'affichage du sous menu qu'il contient (Figure **5D**). L'élément E1 du sous-menu est alors présélectionné par défaut.

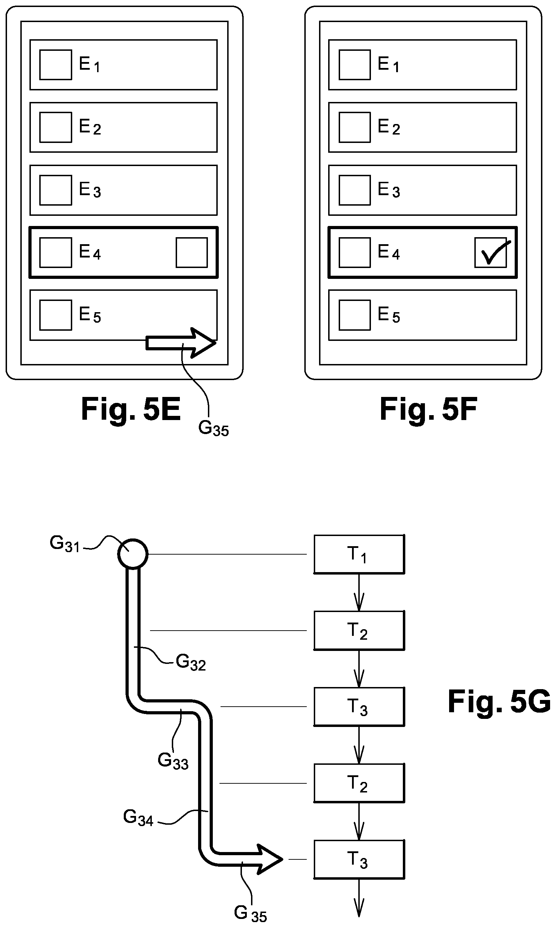

L'utilisateur poursuit son geste, par une portion $G_{34}$, prenant la forme d'un déplacement vertical vers le bas, qui conduit à un déplacement de la sélection par défaut de l'élément E1 vers l'élément $E_4$ (Figure **5E**). L'utilisateur termine son geste par une portion $G_{35}$ linéaire horizontale vers la droite, interprétée en T3 comme une validation de la sélection de l'élément $E_4$.

Dans cet exemple, l'élément $E_4$ est une case à cocher. Le geste composé $G_{31}$-$G_{32}$-$G_{33}$-$G_{34}$-$G_{35}$ que l'utilisateur a exécuté d'une traite, sans lever son outil de pointage, lui a permis de cocher la case de l'élément $E_4$ (Figure **5F**).

En relation avec la Figure **5G,** les portions ou phases successives du geste $G_3$ sont mises en correspondance avec les étapes T1 à T3 du procédé de traitement selon l'invention. Dans cet exemple, les étapes du procédé de traitement sont mises en oeuvre selon la séquence suivante : T1 pour la portion de geste $G_{31}$, T2 pour la portion de geste $G_{32}$, T3 pour la portion de geste $G_{33}$, T2 pour la portion de geste $G_{34}$ et T3 pour la portion de geste $G_{35}$.

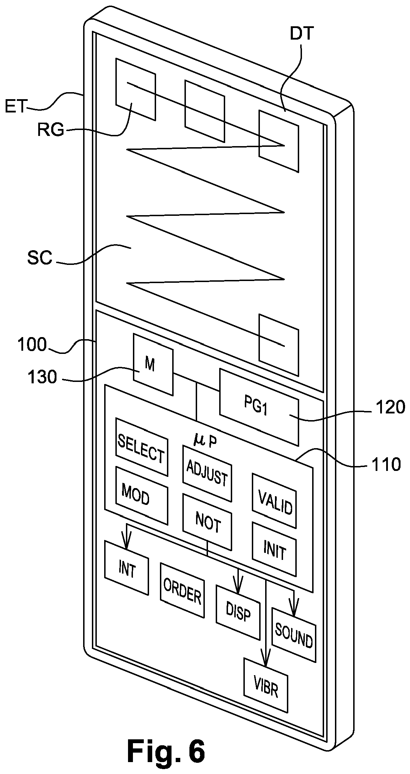

En relation avec la Figure **6,** on présente maintenant la structure simplifiée d'un dispositif de traitement d'un geste tactile selon un exemple de réalisation de l'invention.

Le dispositif de traitement 100 met en oeuvre le procédé de traitement selon l'invention tel que décrit ci-dessus.

Dans cet exemple, le dispositif 100 est intégré à un équipement terminal ET, comprenant une dalle tactile DT superposée à un écran de restitution SC.

Par exemple, le dispositif 100 comprend une unité de traitement 110, équipée par exemple d'un processeur P1, et pilotée par un programme d'ordinateur $Pg_1$ 120, stocké dans une mémoire 130 et mettant en oeuvre le procédé de traitement selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé de traitement décrit précédemment, selon les instructions du programme d'ordinateur 120. Selon un mode de réalisation de l'invention, le dispositif 100 comprend au moins une unité SELECT de sélection d'un élément graphique affiché à l'écran, une unité ADJUST d'ajustement de la sélection sur l'élément graphique suivant de ladite séquence ordonnée - sur détection d'un déplacement de l'outil de pointage dans une direction déterminée, le nombre d'éléments graphiques parcouru dans la séquence étant proportionnel à une distance parcourue par l'outil de pointage sur la dalle tactile, une unité de validation de la sélection ajustée, sur détection d'un changement de direction de l'outil de pointage, comprenant le déclenchement d'une commande de validation associée au dernier élément graphique sélectionné.

L'unité SELECT comprend, selon l'invention une sous-unité de basculement du mode d'interaction séquentielle au mode d'interaction graphique, une sous unité de sélection d'un élément graphique et une sous-unité de basculement du mode d'interaction graphique au mode d'interaction séquentielle.

Ces unités sont pilotées par le processeur P1 de l'unité de traitement 110.

Le dispositif 100 de traitement est donc agencé pour coopérer avec l'équipement terminal ET et, en particulier les modules suivants de ce terminal :un module $INT_T$ de traitement des interactions tactiles de l'utilisateur, un module ORDER de commande d'une action associée à un élément graphique de la représentation RG, un module DISP de restitution d'une représentation graphique RG et un module SOUND d'émission d'un signal sonore. Selon un mode de réalisation de l'invention, le dispositif 100 comprend en outre une unité INIT d'initialisation d'une présélection par défaut, un module MOD de modification de la représentation graphique en fonction de la distance parcourue par le geste et un module NOT de notification de l'utilisateur lorsque lorsqu'une sélection a été initialisée, ajustée ou validée. Le module NOT est apte à transmettre un message de notification vibratoire, visuel ou sonore à destination des modules d'interaction concernés de l'équipement terminal, à savoir un module vibreur VIBR, le module DISP ou un microphone SOUND.

L'invention qui vient d'être présentée peut s'appliquer à tout type d'interface sensible connectée à un équipement terminal d'utilisateur, pourvu que ce dernier affiche, sur la surface même d'interaction ou bien sur un écran déporté, une représentation graphique d'une séquence ordonnée d'éléments graphiques sélectionnables. Elle facilite la navigation dans une telle représentation, pour tout type d'utilisateur, qu'il soit voyant, malvoyant ou en situation « eye-free ».

**Revendications**

1. Procédé de traitement d'un geste composé, effectué par un utilisateur (UT) à l'aide d'un outil de pointage sur une dalle sensible (DT) d'un équipement terminal (ET), ledit équipement comportant en outre un écran (SC) apte à restituer une représentation graphique (RG) d'au moins une partie d'une séquence ordonnée d'éléments graphiques sélectionnables ($EG_1$, $EG_2$, ...$EG_M$), et un module (INT) de traitement d'une interaction avec la dalle sensible apte à interpréter ladite interaction selon un mode d'interaction appartenant à un groupe comprenant au moins un mode d'interaction séquentielle par positionnement relatif mis en oeuvre par défaut, et un mode d'interaction graphique par positionnement absolu, **caractérisé en ce que** le procédé comprend une étape (T1) de sélection, mise en oeuvre pendant l'exécution du geste par l'utilisateur, ladite étape comprenant les sous-étapes suivantes :

  - sur détection d'un pointage statique d'une position spatiale de la dalle sensible pendant une période de temps prédéterminée, basculement ($T_{1,0}$) depuis le mode d'interaction séquentielle par positionnement relatif dans le mode d'interaction graphique par positionnement absolu, et, lorsque ladite position pointée est située à une distance inférieure à un seuil prédéterminé d'un élément graphique affiché à l'écran,
  - sélection ($T_{1,1}$) dudit élément graphique,
  - puis, une fois la sélection ($T_{1,1}$) de l'élément graphique initialisée en mode d'interaction graphique par positionnement absolu, basculement ($T_{1,2}$) dans le mode d'interaction séquentielle par positionnement relatif, sans relevé de l'outil de pointage.

2. Procédé de traitement d'un geste composé selon la revendication **1,** comprenant en outre l'étape suivante :

  - sur détection d'un déplacement de l'outil de pointage selon une première orientation prédéterminée, ajustement (T2) de la sélection sur un élément graphique suivant ou précédent, selon une première direction du déplacement, de ladite séquence ordonnée, le nombre d'éléments graphiques parcouru dans la séquence étant proportionnel au déplacement de l'outil de pointage sur la dalle sensible et indépendant de la disposition spatiale des éléments graphiques.

3. Procédé de traitement d'un geste composé selon l'une des revendications **1** ou **2,** comprenant en outre l'étape suivante :

  - sur détection d'un déplacement de l'outil de pointage selon une deuxième orientation et une deuxième direction prédéterminées, validation (T3) de la sélection, comprenant le déclenchement d'une commande de validation associée au dernier élément graphique sélectionné.

4. Procédé de traitement d'un geste selon l'une des revendications **1** à **3,** dans lequel, préalablement à l'étape de sélection, un élément graphique sélectionnable et affiché sur l'écran, est présélectionné (T0).

5. Procédé de traitement d'un geste selon l'une des revendications **3** à **4,** comprenant en outre une étape de modification de la représentation graphique restituée à l'écran au moins en fonction de l'ajustement de la sélection.

6. Procédé de traitement d'un geste selon l'une des revendications **3** à **5,** dans lequel la commande de validation appartient à un groupe comprenant au moins :

  - l'accession à un niveau inférieur d'un menu hiérarchique d'éléments graphiques sélectionnables ;
  - le lancement d'un programme applicatif déterminé ;
  - la validation d'une option ;
  - le retour au niveau supérieur d'un menu hiérarchique d'éléments graphiques sélectionnables.

7. Procédé de traitement d'un geste selon l'une des revendications **3** à **6,** dans lequel, suite à la validation de la sélection, ladite validation comprenant le déclenchement d'une commande d'accession à un sous-menu hiérarchique d'éléments graphiques, ledit procédé est apte à répéter au moins une des étapes de sélection (T1), d'ajustement (T2) et de validation (T3), en fonction de l'interaction détectée.

8. Procédé de traitement d'un geste selon l'une des revendications **1** à **7,** comprenant en outre une étape d'émission d'un signal de notification visuelle, vibratoire ou sonore, lorsqu'une sélection, un ajustement ou une validation a été effectuée.

9. Dispositif (100) de traitement d'un geste composé, effectué par un utilisateur (UT) à l'aide d'un outil de pointage sur une dalle sensible (DT) d'un équipement terminal (ET), ledit équipement comportant en outre un écran (SC) apte à restituer une représentation graphique (RG) d'au moins une partie d'une séquence ordonnée d'éléments graphiques ($EG_1$,

EG$_2$, ...EG$_M$) sélectionnables, le dit dispositif comprenant un module de traitement (INT) d'une interaction avec la dalle sensible apte à interpréter ladite interaction selon un mode d'interaction appartenant à un groupe comprenant au moins un mode d'interaction séquentielle par positionnement relatif mis en oeuvre par défaut, et un mode d'interaction graphique par positionnement absolu, **caractérisé en ce que** le dispositif comprend une unité (SELECT) de sélection, mis en oeuvre pendant l'exécution du geste par l'utilisateur et comprenant les sous-unités suivantes:

- sur détection d'un pointage statique d'une position spatiale de la dalle sensible pendant une période de temps prédéterminée, basculement depuis le mode d'interaction séquentielle par positionnement relatif dans le mode d'interaction graphique par positionnement absolu, et lorsque ladite position pointée est située à une distance inférieure à un seuil prédéterminé d'un élément graphique affiché à l'écran, sélection dudit élément graphique, puis, une fois la sélection (T$_{1,1}$) de l'élément graphique initialisée en mode d'interaction graphique par positionnement absolu, basculement dans le mode d'interaction séquentielle par positionnement relatif, sans relevé de l'outil de pointage.

10. Equipement terminal (ET) d'un utilisateur (UT), comprenant une dalle sensible (DT) et un écran de restitution (SC) apte à restituer une représentation graphique (RG) d'au moins une partie d'une séquence ordonnée d'éléments graphiques sélectionnables (EG$_1$, EG$_2$, ..., EG$_M$), comprenant un dispositif (100) de traitement d'un geste composé par l'utilisateur sur ladite dalle à l'aide d'un outil de pointage selon la revendication **9**.

11. Programme d'ordinateur (Pg1) comprenant des instructions pour la mise en oeuvre des étapes du procédé de traitement d'un geste selon les revendications **1** à **8**, lorsqu'il est exécuté par un processeur.

12. Support d'enregistrement lisible par un processeur, sur lequel est enregistré un programme d'ordinateur selon la revendication **11**.

**Patentansprüche**

1. Verfahren zur Verarbeitung einer zusammengesetzten Geste, die von einem Benutzer (UT) mithilfe eines Zeigeinstruments auf einer empfindlichen Platte (DT) eines Endgeräts (ET) ausgeführt wird, wobei das Gerät ferner einen Bildschirm (SC) umfasst, der geeignet ist, eine grafische Darstellung (RG) mindestens eines Teils einer geordneten Sequenz aus auswählbaren grafischen Elementen (EG$_1$, EG$_2$, ..., EG$_M$) wiederzugeben, und ein Modul (INT) zur Verarbeitung einer Interaktion mit der empfindlichen Platte, das geeignet ist, die Interaktion gemäß einem Interaktionsmodus zu interpretieren, der einer Gruppe angehört, die mindestens einen standardmäßig eingesetzten Modus der sequenziellen Interaktion durch Relativpositionierung und einen Modus der grafischen Interaktion durch Absolutpositionierung umfasst, **dadurch gekennzeichnet, dass** das Verfahren einen Schritt (T1) des Auswählens umfasst, der während des Ausführens der Geste durch den Benutzer durchgeführt wird, wobei der Schritt die folgenden Teilschritte umfasst:

- beim Erfassen eines statischen Zeigens einer räumlichen Position der empfindlichen Platte während eines vorgegebenen Zeitraums Umschalten (T$_{1,0}$) vom Modus der sequenziellen Interaktion durch Relativpositionierung in den Modus der grafischen Interaktion durch Absolutpositionierung und, wenn die gezeigte Position in einem Abstand, der geringer als ein vorgegebener Grenzwert ist, von einem auf dem Bildschirm angezeigten grafischen Element liegt,
- Auswählen (T$_{1,1}$) des grafischen Elements,
- dann, nach dem Auswählen (T$_{1,1}$) des grafischen Elements, das im Modus der grafischen Interaktion durch Absolutpositionierung eingeleitet wurde, Umschalten (T$_{1,2}$) in den Modus der sequenziellen Interaktion durch Relativpositionierung ohne Abheben des Zeigeinstruments.

2. Verfahren zur Verarbeitung einer zusammengesetzten Geste nach Anspruch 1, umfassend ferner den folgenden Schritt:

- beim Erfassen einer Bewegung des Zeigeinstruments gemäß einer ersten vorgegebenen Ausrichtung Anpassen (T2) der Auswahl auf ein folgendes oder vorhergehendes grafisches Element, gemäß einer ersten Bewegungsrichtung, der geordnete Sequenz, wobei die Anzahl der in der Sequenz durchlaufenen grafischen Elemente proportional zur Bewegung des Zeigeinstruments auf der empfindlichen Platte und unabhängig von der räumlichen Anordnung der grafischen Elemente ist.

3. Verfahren zur Verarbeitung einer zusammengesetzten Geste nach Anspruch 1 oder 2, umfassend ferner den folgenden Schritt:

- beim Erfassen einer Bewegung des Zeigeinstruments gemäß einer zweiten vorgegebenen Ausrichtung und einer zweiten vorgegebenen Richtung Bestätigen (T3) der Auswahl, umfassend das Auslösen eines Bestätigungsbefehls, der dem letzten ausgewählten grafischen Element zugeordnet ist.

4. Verfahren zur Verarbeitung einer Geste nach einem der Ansprüche 1 bis 3, bei dem vor dem Schritt des Auswählens ein auswählbares und auf dem Bildschirm angezeigtes grafisches Element vorausgewählt wird (T0).

5. Verfahren zur Verarbeitung einer Geste nach einem der Ansprüche 3 bis 4, umfassend ferner einen Schritt des Änderns der auf dem Bildschirm wiedergegebenen grafischen Darstellung zumindest in Abhängigkeit von der Anpassung der Auswahl.

6. Verfahren zur Verarbeitung einer Geste nach einem der Ansprüche 3 bis 5, bei dem der Bestätigungsbefehl einer Gruppe angehört, die mindestens umfasst:

   - das Zugreifen auf eine tiefere Ebene eines hierarchischen Menüs mit auswählbaren grafischen Elementen;
   - das Starten eines bestimmten Anwendungsprogramms;
   - das Bestätigen einer Option;
   - das Zurückkehren zu einer höheren Ebene eines hierarchischen Menüs mit auswählbaren grafischen Elementen.

7. Verfahren zur Verarbeitung einer Geste nach einem der Ansprüche 3 bis 6, bei dem nach dem Bestätigen der Auswahl, wobei das Bestätigen das Auslösen eines Befehls zum Zugreifen auf ein hierarchisches Untermenü mit grafischen Elementen umfasst, das Verfahren geeignet ist, mindestens einen der Schritte des Auswählens (T1), Anpassens (T2) und Bestätigens (T3) in Abhängigkeit von der erfassten Interaktion zu wiederholen.

8. Verfahren zur Verarbeitung einer Geste nach einem der Ansprüche 1 bis 7, umfassend ferner einen Schritt des Aussendens eines optischen, vibratorischen oder akustischen Benachrichtigungssignals, wenn eine Auswahl, eine Anpassung oder eine Bestätigung ausgeführt wurde.

9. Vorrichtung (100) zur Verarbeitung einer zusammengesetzten Geste, die von einem Benutzer (UT) mithilfe eines Zeigeinstruments auf einer empfindlichen Platte (DT) eines Endgeräts (ET) ausgeführt wird, wobei das Gerät ferner einen Bildschirm (SC) umfasst, der geeignet ist, eine grafische Darstellung (RG) mindestens eines Teils einer geordneten Sequenz aus auswählbaren grafischen Elementen ($EG_1$, $EG_2$, ..., $EG_M$) wiederzugeben, wobei die Vorrichtung ein Modul (INT) zur Verarbeitung einer Interaktion mit der empfindlichen Platte umfasst, das geeignet ist, die Interaktion gemäß einem Interaktionsmodus zu interpretieren, der einer Gruppe angehört, die mindestens einen standardmäßig eingesetzten Modus der sequenziellen Interaktion durch Relativpositionierung und einen Modus der grafischen Interaktion durch Absolutpositionierung umfasst, **dadurch gekennzeichnet, dass** die Vorrichtung eine Auswahleinheit (SELECT) umfasst, die während des Ausführens der Geste durch den Benutzer eingesetzt wird und die folgenden Untereinheiten umfasst:

   - beim Erfassen eines statischen Zeigens einer räumlichen Position der empfindlichen Platte während eines vorgegebenen Zeitraums Umschalten vom Modus der sequenziellen Interaktion durch Relativpositionierung in den Modus der grafischen Interaktion durch Absolutpositionierung und, wenn die gezeigte Position in einem Abstand, der geringer als ein vorgegebener Grenzwert ist, von einem auf dem Bildschirm angezeigten grafischen Element liegt, Auswählen des grafischen Elements, dann, nach dem Auswählen ($T_{1,1}$) des grafischen Elements, das im Modus der grafischen Interaktion durch Absolutpositionierung eingeleitet wurde, Umschalten in den Modus der sequenziellen Interaktion durch Relativpositionierung ohne Abheben des Zeigeinstruments.

10. Endgerät (ET) eines Benutzers (UT), umfassend eine empfindliche Platte (DT) und einen Wiedergabebildschirm (SC), der geeignet ist, eine grafische Darstellung (RG) mindestens eines Teils einer geordneten Sequenz aus auswählbaren grafischen Elementen ($EG_1$, $EG_2$, ..., $EG_M$) wiederzugeben, umfassend eine Vorrichtung (100) zur Verarbeitung einer zusammengesetzten Geste durch den Benutzer auf der Platte mithilfe eines Zeigeinstruments nach Anspruch 9.

11. Computerprogramm (Pg1) mit Anweisungen zum Ausführen der Schritte des Verfahrens zur Verarbeitung einer Geste nach den Ansprüchen 1 bis 8, wenn es von einem Prozessor ausgeführt wird.

12. Vom einem Prozessor lesbares Speichermedium, auf dem ein Computerprogramm nach Anspruch 11 gespeichert ist.

## Claims

1. Method for processing a compound gesture, made by a user (UT) using a pointing tool on a sensitive pad (DT) for a piece of terminal equipment (ET), said equipment moreover having a screen (SC) that is capable of reproducing a graphical representation (RG) of at least part of an ordered sequence of selectable graphical elements ($EG_1$, $EG_2$, ...$EG_M$) and a module (INT) for processing an interaction with the sensitive pad that is capable of interpreting said interaction according to a mode of interaction belonging to a group comprising at least one relative-positioning mode of sequential interaction, which is implemented by default, and an absolute-positioning mode of graphical interaction, **characterized in that** the method comprises a selection step (T1) that is implemented during execution of the gesture by the user, said step comprising the following substeps:

- on detection of static pointing to a spatial position on the sensitive pad during a predetermined period of time, toggling ($T_{1,0}$) from the relative-positioning mode of sequential interaction to the absolute-positioning mode of graphical interaction, and, when said pointing position is situated at a distance below a predetermined threshold from a graphical element displayed on the screen,
- selection ($T_{1,1}$ of said graphical element,
- then, once the selection ($T_{1,1}$) of the graphical element has been initialized to the absolute-positioning mode of graphical interaction toggling ($T_{1,2}$) to the relative-positioning mode of sequential interaction, without the pointing tool being raised.

2. Method for processing a compound gesture according to Claim 1, moreover comprising the following step:

- on detection of movement of the pointing tool in a first predetermined orientation, adjustment (T2) of the selection to a subsequent or preceding graphical element, in a first direction of the movement, in said ordered sequence, the number of graphical elements covered in the sequence being proportional to the movement of the pointing tool on the sensitive pad and independent of the spatial arrangements of the graphical elements.

3. Method for processing a compound gesture according to either of Claims 1 and 2, moreover comprising the following step:

- on detection of movement of the pointing tool in a predetermined second orientation and second direction, validation (T3) of the selection, comprising the triggering of a validation command associated with the last selected graphical element.

4. Method for processing a gesture according to one of Claims 1 to 3, wherein, prior to the selection step, a selectable graphical element displayed on the screen is preselected (T0).

5. Method for processing a gesture according to either of Claims 3 and 4, moreover comprising a step of modifying the graphical representation reproduced on the screen at least on the basis of the adjustment of the selection.

6. Method for processing a gesture according to one of Claims 3 to 5, wherein the validation command belongs to a group comprising at least:

- the access to a lower level of a hierarchic menu of selectable graphical elements;
- the launch of a determined application program;
- the validation of an option;
- the return to the higher level of a hierarchic menu of selectable graphical elements.

7. Method for processing a gesture according to one of Claims 3 to 6, wherein, following the validation of the selection, said validation comprising the triggering of a command for accessing a hierarchic submenu of graphical elements, said method is capable of repeating at least one of the steps of selection (T1), adjustment (T2) and validation (T3), on the basis of the detected interaction.

8. Method for processing a gesture according to one of Claims 1 to 7, moreover comprising a step of emission of a visual, vibratory or audible notification signal when a selection, an adjustment or a validation has been made.

9. Device (100) for processing a compound gesture, made by a user (UT) using a pointing tool on a sensitive pad (DT) for a piece of terminal equipment (ET), said equipment moreover having a screen (SC) that is capable of reproducing a graphical representation (RG) of at least part of an ordered sequence of selectable graphical elements ($EG_1$, $EG_2$, ...$EG_M$), said device comprising a module (INT) for processing an interaction with the sensitive pad that is capable of interpreting said interaction according to a mode of interaction belonging to a group comprising at least one relative-positioning mode of sequential interaction, which is implemented by default, and an absolute-positioning mode of graphical interaction, **characterized in that** the device comprises a selection unit (SELECT), implemented during the execution of the gesture by the user and comprising the following subunits:

- on detection of static pointing to a spatial position on the sensitive pad during a predetermined period of time, toggling from the relative-positioning mode of sequential interaction to the absolute-positioning mode of graphical interaction, and, when said pointing position is situated at a distance below a predetermined threshold from a graphical element displayed on the screen, selection of said graphical element, then, once the selection ($T_{1,1}$) of the graphical element has been initialized to the absolute-positioning mode of graphical interaction, toggling to the relative-positioning mode of sequential interaction, without the pointing tool being raised.

10. Terminal equipment (ET) of a user (UT), comprising a sensitive pad (DT) and a reproduction screen (SC) that is capable of reproducing a graphical representation (RG) of at least part of an ordered sequence of selectable graphical elements ($EG_1$, $EG_2$, ..., $EG_M$), comprising a device (100) for processing a compound gesture by the user on said pad using a pointing tool according to Claim 9.

11. Computer program (Pg1) comprising instructions for the implementation of the steps of the method for processing a gesture according to Claims 1 to 8 when it is executed by a processor.

12. Recording medium that can be read by a processor, on which a computer program according to Claim 11 is recorded.

Fig. 1

Fig. 2

**Fig. 3A**

**Fig. 3B**

**Fig. 3C**

**Fig. 3D**

**Fig. 3E**

**Fig. 3F**

**Fig. 4A**

**Fig. 4B**

**Fig. 4C**

**Fig. 4D**

| | |
|---|---|
| A | |
| B | |
| C | |
| D | |
| E | |
| F | |
| G  →  $G_{24}$ | |
| H | |

**Fig. 4E**

| |
|---|
| $B_1$ |
| $B_2$ |
| $B_3$ |
| $B_4$ |
| $B_5$ |

**Fig. 4F**

$G_{24}$

$G_{23}$

$G_{22}$

$G_{21}$ ○

$T_3$

$T_2$

$T_2$

$T_1$

**Fig. 4G**

**Fig. 5A**

**Fig. 5B**

**Fig. 5C**

**Fig. 5D**

**Fig. 5E**

$G_{35}$

**Fig. 5F**

**Fig. 5G**

$G_{31}$ $G_{32}$ $G_{33}$ $G_{34}$ $G_{35}$

$T_1$ $T_2$ $T_3$ $T_2$ $T_3$

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090271733 A
- EP 2192479 A
- US 20080062141 A